# FASCICULE DE BREVET EUROPEEN

(11) **EP 2 949 965 B1**
(45) Date de publication et mention de la délivrance du brevet: **04.01.2017**
(21) Numéro de dépôt: 15169201.9
(22) Date de dépôt: 26.05.2015
(51) Int. Cl.: F16G 1/28, F16G 3/02, F16G 3/10

(54) **DISPOSITIF DE JONCTION POUR FERMER UNE BANDE DE MATIERE EN BOUCLE ET BANDE DE MATIERE POUVUE D'UN TEL DISPOSITIF DE JONCTION**
VERBINDUNGSELEMENT ZUM VERBINDEN VON ENDEN EINES LÄNGLICHEN ELEMENTS UND EIN LÄNGLICHES ELEMENT AUFWEISEND DAS VERBINDUNGSELEMENT
CONNECTING ARRANGEMENT FOR JOINING ENDS OF AN ELONGATED MEMBER AND AN ELONGATED MEMBER COMPRISING SAID CONNECTING ARRANGEMENT

(30) Priorité: 30.05.2014 FR 1454900
(43) Date de publication de la demande: 02.12.2015
(73) Titulaire: Tanals Société par actions simplifiées (SAS), 68290 Masevaux (FR)
(72) Inventeur: Frey, Pierre-Régis, 68460 LUTTERBACH (FR)
(74) Mandataire: Koelbel, Caroline

(56) Documents cités:
- WO-A1-2012/155281
- DE-C- 444 469
- GB-A- 2 290 515
- US-A- 3 212 627

## Description

### Domaine technique :

La présente invention concerne un dispositif de jonction pour fermer une bande de matière en boucle, telle que notamment une bande transporteuse, une courroie de transmission ou similaire, ce dispositif de jonction comportant deux éléments de jonction pourvus à une extrémité d'une zone d'assemblage agencée pour être liée intimement respectivement aux deux extrémités longitudinales de la bande de matière, et d'une denture à l'autre extrémité, les dentures étant prévues respectivement dans le plan des éléments de jonction et étant de forme complémentaire pour s'emboîter entre elles, les dents de chaque denture comportant au moins un orifice transversal aligné avec celui des dents voisines, de sorte à définir, lorsque les dentures sont emboîtées, au moins un passage transversal agencé pour accueillir au moins une tige de verrouillage.

L'invention concerne également une bande de matière, telle que notamment une bande transporteuse, une courroie de transmission ou similaire, cette bande de matière étant fermée en boucle par un dispositif de jonction tel que défini ci-dessus.

### Technique antérieure :

Un tel dispositif de jonction est notamment divulgué dans la publication WO 2012/155281 A1 en référence à une courroie crantée. La courroie crantée, appelée également courroie dentée ou synchrone, est de manière connue utilisée pour assurer une transmission sans glissement, au même titre que les chaînes ou les engrenages, avec pour avantage de ne pas générer de nuisance sonore. Dans ce type de courroie, il est par conséquent impératif que le pas des dents soit fixe et invariable dans le temps.

Ce type de courroie peut être produit par extrusion en boucle fermée ou en bande de matière continue à couper et à assembler soit par une jonction définitive, soit par une jonction démontable. Dans le cas d'une jonction, celle-ci ne doit pas influer ni sur le pas des dents, ni sur la flexibilité de la courroie qui doit continuer à s'enrouler parfaitement autour des poulies qu'elle engrène, sans jeu ni glissement. Cette jonction ne doit donc pas s'allonger, ni être rigide en flexion à cause du passage sur les poulies. Or le dispositif de jonction décrit dans la publication mentionnée ci-dessus est formé de deux plaques en acier ressort, qui même si elles sont positionnées dans le plan de flexion neutre de la courroie introduisent dans la zone de jonction de la courroie une raideur en flexion incompatible avec la fonction de la courroie et fortement pénalisante sur la durée de vie de la courroie. De plus, l'acier n'est pas compatible avec la matière thermoplastique de la courroie et c'est la raison pour laquelle les éléments de jonction comportent des évidements pour permettre l'accrochage de la matière thermoplastique par fusion. Les éléments de jonction en acier ont toutefois l'intérêt d'apporter une résistance à la traction de la jonction, puisqu'ils sont assemblés entre eux par l'emboîtement de deux dentures très courtes couplées par une seule tige de verrouillage transversale formant une articulation. Néanmoins, ce dispositif de jonction doit être fabriqué dans chaque largeur de courroie, ce qui impose une gestion d'un grand nombre de références. En effet, il n'est pas envisageable de produire ce dispositif de jonction dans une seule dimension, découpé ensuite à la largeur et à la longueur adaptées à la courroie à équiper. De plus, l'assemblage du dispositif de jonction aux extrémités de la courroie ne peut pas être déporté au distributeur ou au client final compte tenu de sa spécificité. Cette solution n'est donc pas satisfaisante.

La publication GB 2 290 515 A traite de jonctions pour convoyeurs ouverts formés de deux courroies distantes et parallèles, reliées entre elles par des barres transversales parallèles, qui sont sans rapport avec les courroies crantées. Toutefois, certaines jonctions décrites prévoient que les câbles de renfort des courroies forment une boucle autour des orifices transversaux prévus dans la zone d'assemblage des courroies. Ce mode de réalisation impose une fabrication individualisée de chaque convoyeur défini par une largeur et une longueur, ce qui est économiquement non rentable. D'autres jonctions similaires sont également décrites dans les publications US 3,212,627 A et DE 444 469 C pour des convoyeurs non crantés. En plus de l'inconvénient économique évoqué précédemment, ce mode de fabrication introduit inévitablement une surépaisseur dans la zone d'assemblage du fait de la boucle formée par les câbles de renfort autour des orifices transversaux mais également par la superposition de câbles de renfort ajoutés dans cette zone. Ce type de jonction n'est par conséquent pas adapté à des courroies crantées puisque toute surépaisseur modifie le pas à l'enroulement et interdit l'engrènement de la courroie dans les poulies. Ces solutions ne sont pas non plus satisfaisantes.

### Exposé de l'invention :

La présente invention vise à pallier ces inconvénients en proposant un dispositif de jonction, séparé de la bande de matière, réalisé dans une matière compatible avec celle de la bande de matière, présentant une résistance à l'allongement similaire à celle de la bande de matière, tout en offrant une résistance élevée à la traction, en respectant l'épaisseur de la bande de matière, et en restant très souple en flexion ce lui assure une très grande résistance à la fatigue, ce dispositif étant en outre simple à fabriquer, peu coûteux, réversible et facile à mettre en oeuvre par le fabricant, le distributeur, voire le client, pour équiper toute courroie crantée ou non, renforcée ou non, pouvant être aisément adapté en largeur et/ou en longueur aux dimensions de la courroie à équiper.

Dans ce but, l'invention concerne un dispositif de jonction du genre indiqué en préambule, caractérisé en ce que les éléments de jonction sont réalisés dans une matière thermoplastique compatible avec la matière de ladite bande et comportent chacun au moins une âme de traction noyée dans ladite matière thermoplastique, ladite âme de traction s'étendant longitudinalement dans lesdits éléments de jonction jusque dans les dents de chaque denture et ladite âme de traction entourant au moins partiellement l'orifice transversal des dents de chaque denture de sorte que, lorsque ledit dispositif de jonction est assemblé par ladite tige de verrouillage, les âmes de traction des deux éléments de jonction augmentent la résistance à la traction dudit dispositif de jonction.

Selon les variantes de réalisation de l'invention, chaque élément de jonction comporte une âme de traction disposée en spires longitudinales entre sa zone d'assemblage et sa denture, ou encore une pluralité d'âmes de traction disposées en boucles longitudinales entre sa zone d'assemblage et sa denture. Dans tous les cas, les brins des spires ou des boucles longitudinales formées par ladite âme de traction sont disposés dans un même plan longitudinal confondu avec la fibre neutre dudit dispositif de jonction.

Selon les variantes de réalisation, les spires ou les boucles longitudinales peuvent être reliées entre elles par une trame transversale formant avec elles un treillis.

Dans le cas d'une bande de matière pourvue d'une face crantée, les éléments de jonction comportent avantageusement une face crantée de manière à assurer la continuité et le pas des crans de ladite bande de matière.

Les dentures des éléments de jonction peuvent comporter des dents parallélépipédiques, et les dents des dentures peuvent comporter un seul orifice transversal agencé pour définir un axe d'articulation lorsque le dispositif de jonction est assemblé.

Les éléments de jonction peuvent également comporter au moins une fente longitudinale séparant leur denture en au moins deux parties agencées pour accueillir dans le passage transversal défini par les orifices transversaux au moins deux tiges de verrouillage disposées tête bêche.

La zone d'assemblage de chaque élément de jonction peut comporter au moins un doigt et un creux tous deux allongés et de forme complémentaire.

Dans ce but également, l'invention concerne une bande de matière du genre indiqué en préambule, caractérisée en ce qu'elle comporte un dispositif de jonction tel que défini ci-dessus.

### Description sommaire des dessins :

La présente invention et ses avantages apparaîtront mieux dans la description suivante de modes de réalisation donnés à titre d'exemples non limitatifs, en référence aux dessins annexés, dans lesquels:

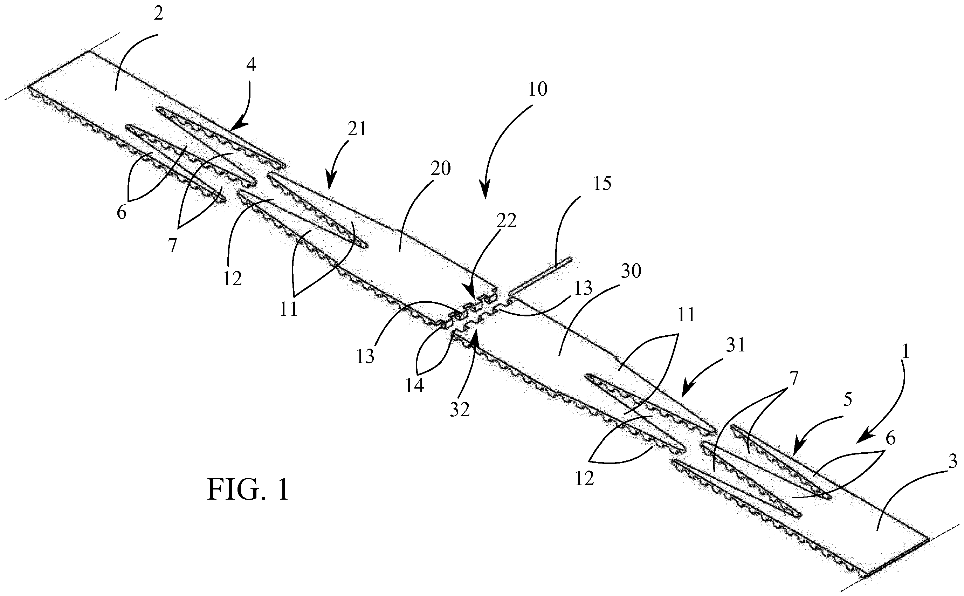

- la figure 1 est une vue éclatée d'un dispositif de jonction selon l'invention disposé entre deux extrémités longitudinales d'une bande de matière,
- la figure 2 est une vue partielle d'une bande de matière fermée en boucle par le dispositif de jonction de la figure 1,
- la figure 3 est une vue en coupe longitudinale d'un des éléments du dispositif de jonction,
- la figure 4 est une vue de dessus en coupe de l'élément de jonction de la figure 3 selon une première forme de réalisation,
- la figure 5 est une vue similaire à la figure 4 selon une seconde forme de réalisation, et
- la figure 6 est une vue en perspective du dispositif de jonction selon une variante de réalisation de l'invention assemblé par deux tiges de verrouillage disposées tête bêche.

### Illustrations de l'invention et différentes manières de la réaliser :

En référence aux figures, le dispositif de jonction 10 selon l'invention permet de fermer une bande de matière 1 en boucle, telle que notamment une bande transporteuse, une courroie de transmission ou similaire. L'exemple illustré dans les figures montre une courroie de transmission crantée, mais cet exemple n'est pas limitatif puisque l'invention s'applique à tout type de bande de matière, pourvue ou non d'une face crantée, pourvue ou non d'une âme de renfort ou similaire. Dans le cas d'une courroie pourvue d'une face crantée, le dispositif de jonction 10 comportera la même face crantée de manière à assurer la continuité et le pas des crans de la bande de matière 1. La longueur du pas, la largeur des crans, le profil des crans, etc. sont des données fixées par des standards en fonction des poulies engrenant ce type de courroies.

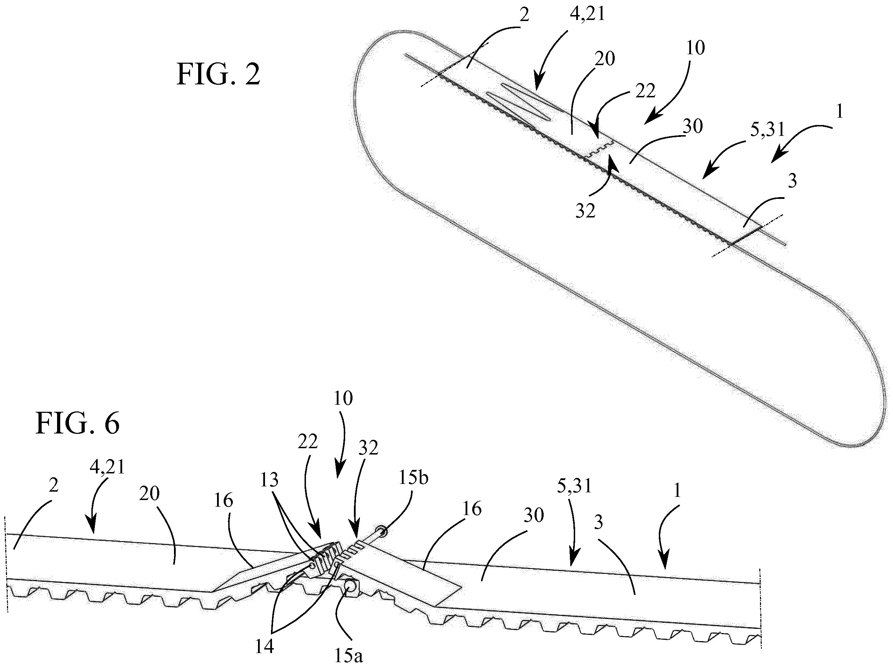

Le dispositif de jonction 10 comporte notamment deux éléments de jonction 20, 30 qui sont distincts, séparés et rapportés respectivement aux extrémités 2, 3 longitudinales de la bande de matière 1 par un assemblage intime réalisé de préférence par thermo-soudage ou similaire. A cet effet, les éléments de jonction 20, 30 du dispositif de jonction 10 sont réalisés dans une matière compatible avec la matière de la bande de matière 1 pour garantir une liaison chimique intime et durable. Ces matières sont majoritairement des thermoplastiques et à titre d'exemple non limitatif des polyuréthanes. De plus, les éléments de jonction 20, 30 sont agencés pour prolonger la bande de matière 1 sans qu'il soit possible de les distinguer et sans créer de surépaisseur. C'est pourquoi, ils présentent une même épaisseur, une même largeur, un même profil cranté, etc. que ceux de la bande de matière 1. D'autre part, les extrémités 2, 3 de la bande de matière 1 et les extrémités 21, 31 correspondantes des éléments de jonction 20, 30 comportent des zones d'assemblage 4, 5, 21, 31 qui s'étendent respectivement dans le plan de la bande de matière 1 et des éléments de jonction 20, 30. Ces zones d'assemblage 4, 5, 21, 31 peuvent présenter une forme géométrique rectiligne, mais comportent de préférence des formes géométriques plus complexes permettant un emboîtement mécanique. Dans les figures, ces zones d'assemblage 4, 5, 21, 31 comportent une alternance de doigts 6, 11 et de creux 7, 12 allongés, de forme triangulaire à angles arrondis, symétriques et complémentaires pour pouvoir s'emboiter l'une dans l'autre avant d'être fusionnées. Bien entendu, toute autre forme d'emboitement complémentaire peut convenir. L'intérêt principal de ces zones d'assemblage 4, 5, 21, 31 réside dans l'augmentation des surfaces de contact et dans leur répartition sur une longueur d'assemblage assez grande pour améliorer à la fois la liaison chimique et la liaison mécanique entre les éléments de jonction 20, 30 et la bande de matière 1. La figure 2 illustre en partie la bande de matière 1 fermée en boucle par le dispositif de jonction 10 et montre d'une part les zones d'assemblage 4, 21 visibles avant fusion, du côté gauche du dispositif de jonction 10, et d'autre part les zones d'assemblage 5, 31 invisibles après fusion, du côté droit du dispositif de jonction 10. Ainsi, le dispositif de jonction 10 est conçu pour se confondre avec la bande de matière 1 après assemblage et faire partie intégrante de la courroie.

Les éléments de jonction 20, 30 du dispositif de jonction 10 comportent à leur extrémité libre une denture 22, 32. Les dentures 22, 32 s'étendent dans le plan desdits éléments de jonction 20, 30 et présentent une forme géométrique complémentaire pour s'emboîter entre elles. Dans l'exemple illustré, les dents 13 de chaque denture 22, 32 comportent un orifice transversal 14 aligné avec celui des dents 13 voisines, de sorte à définir, lorsque les dentures 22, 32 sont emboîtées, un passage transversal agencé pour accueillir au moins une tige de verrouillage 15. Ainsi, les orifices transversaux 14 et la tige de verrouillage 15 forment un axe d'articulation rendant le dispositif de jonction 10 flexible. Bien entendu, cet exemple n'est pas limitatif et en fonction du cahier des charges de la courroie à fabriquer, il est possible de prévoir plusieurs orifices transversaux 14 parallèles pour accueillir plusieurs tiges de verrouillage 15 parallèles. Les dents 13 des dentures 22, 32 sont peu profondes, dans l'exemple représenté, et de forme carrée pour s'emboîter dans l'axe longitudinal de la bande de matière 1. Ces dents 13 sont identiques et symétriques mais peuvent être différentes et asymétriques. De même, elles peuvent présenter d'autres formes géométriques complémentaires, telle que par exemple une forme en queue d'aronde qui imposent de les assembler dans un axe perpendiculaire à l'axe longitudinal de la bande de matière 1, moins pratique mais offrant un verrouillage mécanique additionnel. Les orifices transversaux 14 ménagés dans chacune des dents 13 peuvent être lisses ou structurés, nus ou pourvus d'un insert par exemple sous la forme d'un manchon ayant une fonction de renfort mécanique. Toute autre forme de réalisation de ces orifices transversaux 14 notamment en fonction des tiges de verrouillage 15 à recevoir est envisageable.

Les tiges de verrouillage 15 ont une longueur qui s'étend sur toute la largeur du dispositif de jonction 10. Elles peuvent être lisses, filetées, auto-taraudeuses, avec tête ou sans tête, serties ou non, associées ou non à un écrou et à un contre-écrou, en deux parties emboitables, etc. Dans la variante illustrée à la figure 6, la tige de verrouillage 15 unique est remplacée par deux tiges de verrouillage 15a, 15b qui s'étendent sur la moitié de la largeur du dispositif de jonction 10, comportent chacune une tête plate et sont disposées tête bêche dans le même passage transversal formé par les orifices transversaux 14 de sorte à s'auto-bloquer transversalement. Dans cette variante, les éléments de jonction 20, 30 comportent une fente longitudinale 16 qui partage chaque denture 22, 32 en deux parties égales. Cette fente 16 permet, lors de l'assemblage des éléments de jonction 20, 30, d'accéder à une première moitié des dentures 22, 32 par le centre du dispositif de jonction 10 pour y introduire une première tige de verrouillage 15a, puis d'accéder à la seconde moitié des dentures 22, 32 par le centre du dispositif de jonction 10 pour y introduire la seconde tige de verrouillage 15b. Ce mode d'assemblage peut être particulièrement avantageux pour des grandes largeurs de bandes de matière 1. Bien entendu, la fente longitudinale 16 peut être décalée par rapport au centre du dispositif de jonction 10. Dans ce cas, on choisira des tiges de verrouillage 15a, 15b de longueur adéquate. Le nombre de fentes longitudinales 16 n'est pas forcément limité à une. Dans ce cas, on adaptera le nombre de tiges de verrouillage et leur longueur.

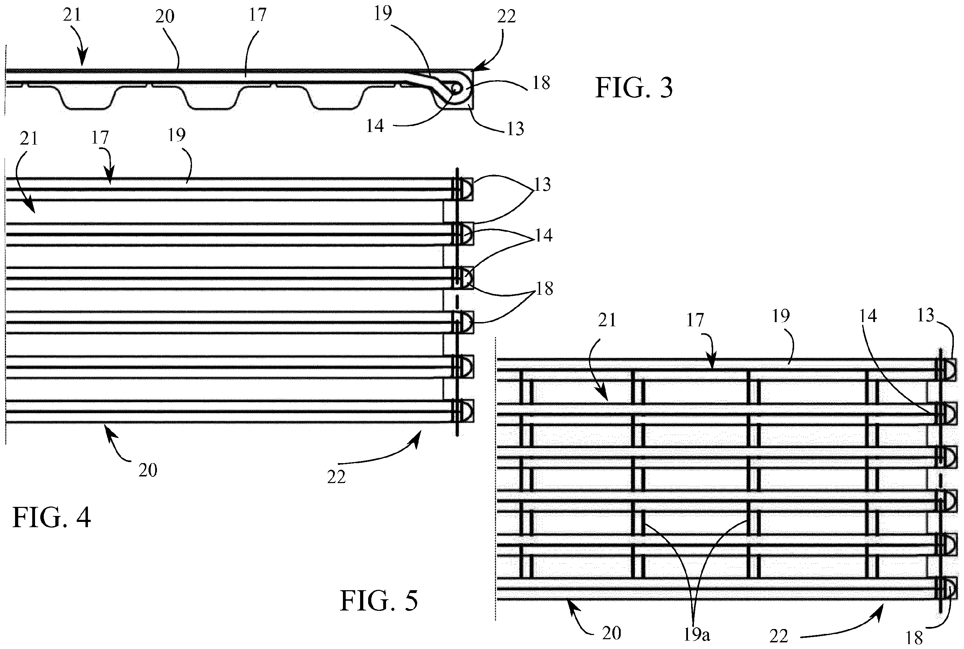

Le dispositif de jonction 10 selon l'invention est remarquable en ce sens qu'il est conçu pour garantir une excellente résistance à la traction de la bande de matière 1 en boucle qui en est pourvue. Pour atteindre cet objectif, les éléments de jonction 20, 30 comportent chacun au moins une âme de traction 17 noyée dans la matière thermoplastique et s'étendant longitudinalement jusque dans les dents 13 de chaque denture 22, 32, comme représenté dans les figures 3, 4 et 5, pour entourer au moins partiellement l'orifice transversal 14 de chaque dent 13 en formant une boucle 18 ouverte ou fermée. Dans l'exemple illustré, chaque élément de jonction 20, 30 comporte une âme de traction 17 unique, disposée dans son épaisseur, de préférence au centre qui correspond à la fibre neutre de la courroie, juste au-dessus de la face crantée, en spires longitudinales 19 entre sa zone d'assemblage 21, 31 et sa denture 22, 32 en formant des boucles 18 autour desdits orifices transversaux 14 ménagés dans les dents 13. Bien entendu, il est également possible de prévoir un nombre d'âmes de traction 17 identique ou non au nombre de dents 13, chaque âme de traction 17 étant disposée en boucle longitudinale 19 entre sa zone d'assemblage 21, 31 et sa denture 22, 32 et autour desdits orifices transversaux 14 ménagés dans les dents 13. Les brins des spires ou boucles longitudinales 19 sont de préférence disposés côte à côte sans se superposer. Il est précisé que chaque dent 13 peut comporter au moins une boucle 18 formée par l'âme de traction 17 mais peut aussi comporter deux boucles 18 par dent 13 ou plus en fonction de la largeur desdites dentes 13. A l'inverse, il est aussi possible de prévoir une boucle 18 dans une dent 13 sur deux ou sur trois en fonction de la résistance à la traction à atteindre.

On entend par « âme de traction 17 », un ou plusieurs fils ou câbles, individuels ou assemblés en toron ou en nappe, torsadés, tressés ou tissés, en matières textiles et/ou métalliques. La figure 5 montre à cet effet une âme de traction 17 dans laquelle les spires ou boucles longitudinales 19 sont assemblées entre elles par une trame transversale 19a formant avec elles un treillis. Cette variante de réalisation présente l'avantage de faciliter la manipulation de l'âme de traction 17 lors de la fabrication du dispositif de jonction 10 comme expliqué plus loin. Cette âme de traction 17 doit adhérer à la matière thermoplastique des éléments de jonction 20, 30 et présenter une excellente résistance à la traction, une grande souplesse, un allongement minimum voire nul, une bonne résistance à la flexion. On privilégiera les filaments continus synthétiques aux fils métalliques, sans que cet exemple ne soit limitatif.

Ainsi, lorsque la bande de matière 1 est fermée en boucle par assemblage et verrouillage des éléments de jonction 20, 30 de son dispositif de jonction 10 au moyen de la tige de verrouillage 15, les boucles 18 formées par l'âme de traction 17 autour des orifices transversaux 14 à l'intérieur des dents 13 de chaque denture 22, 32 se croisent transversalement et sont également verrouillées par la tige de verrouillage 15. Le résultat de cette construction originale est l'obtention d'une jonction mécaniquement très résistante, notamment en traction dans l'axe longitudinal de la bande de matière 1, tout en restant très souple en flexion pour garantir une bonne résistance à la fatigue.

### Possibilités d'application industrielle :

Le dispositif de jonction 10 selon l'invention peut être fabriqué selon un procédé simple de moulage dans une empreinte qui correspond par exemple au format et au profil de la bande de matière 1 à laquelle ce dispositif est destiné. On peut utiliser deux empreintes, une empreinte pour chaque élément de jonction 20, 30 étant donné que les dentures 22, 32 doivent être complémentaires. On peut aussi utiliser une même empreinte avec des inserts amovibles et spécifiques pour chaque élément de jonction 20, 30. On peut avantageusement utiliser une seule empreinte pour fabriquer des éléments de jonction 20, 30 standard et identiques, qui seront ensuite découpés en largeur et/ou en longueur aux dimensions de la bande de matière 1 à équiper.

On dispose dans l'empreinte, une première broche transversale dans la zone destinée à former la denture 22, 32 pour créer les orifices transversaux 14, et une seconde broche transversale dans la zone opposée destinée à former ultérieurement la zone d'assemblage 21, 31. On dépose l'âme de traction 17 dans l'empreinte en partant d'un bord longitudinal de l'empreinte et en décrivant des spires longitudinales 19 d'une broche transversale à l'autre broche transversale pour arriver à l'autre bord longitudinal de l'empreinte. On forme ainsi des boucles 18 notamment autour de la première broche transversale qui délimite les orifices transversaux 14 ménagés dans les dents 13 de chaque denture 22, 32. On peut prévoir une boucle 18 par dent 13 sur toute la longueur de la denture 22, 32. On peut aussi prévoir deux boucles 18 par dent 13 sur toute la longueur de la denture 22, 32. On peut encore prévoir une boucle 18 sur deux dents 13 ou toute autre disposition. L'âme de traction 17 forme ainsi à l'intérieur de l'empreinte une nappe de traction, dans laquelle tous les brins des spires longitudinales 19 sont situés dans un même plan longitudinal, ce plan longitudinal étant de préférence confondu avec la fibre neutre de la bande de matière 1. Bien entendu, les spires longitudinales 19 formées d'une broche transversale à l'autre peuvent être des spires simples sans croisement ou des spires complexes avec au moins un croisement central dans l'épaisseur de l'empreinte. Il est également possible de déposer plusieurs âmes de traction 17. Dans ce cas, chaque âme de traction 17 peut être déposée dans l'empreinte en boucle fermée longitudinale autour des deux broches transversales. Là encore, on peut prévoir un nombre d'âmes de traction 17 identique au nombre de dents 13 pour que chaque dent 13 soit renforcée par une boucle 18, ou toute autre disposition compatible avec le cahier des charges. Dans tous les cas, les spires ou les boucles longitudinales 19 peuvent être sensiblement parallèles entre elles ou croisées dans le plan longitudinal de l'empreinte. Si l'âme de traction 17 est formée d'un treillis comme l'exemple illustré à la figure 5, on dépose d'abord le treillis dans l'empreinte et on met en place ensuite les broches transversales dans les boucles des spires déjà formées. Après avoir positionné l'âme de traction 17, on coule la matière thermoplastique dans l'empreinte pour former un des éléments de jonction 20, 30. On peut mettre l'empreinte remplie sous presse chauffante si nécessaire. Pour démouler l'élément de jonction 20, 30 obtenu, on retire préalablement les deux broches transversales. Lorsque les deux éléments de jonction 20, 30 sont fabriqués, on peut les assembler par leur denture 22, 32 avec la ou les tiges de verrouillage 15, 15a, 15b pour les stocker, les transporter, etc. Ce dispositif de jonction 10 peut être fabriqué dans la largeur des bandes de matière 1 à équiper. Pour simplifier la gestion de stock, il peut être fabriqué dans une largeur standard et découpé à la largeur de la bande de matière 1 à équiper, ou assemblé côte à côte à d'autres dispositifs de jonction 10 identiques pour couvrir de grandes largeurs de bande de matière 1.

Le dispositif de jonction 10 ainsi fabriqué peut être assemblé à la bande de matière 1 soit chez le fabricant, soit chez un distributeur, soit enfin chez le client, étant donné qu'il peut être mis au format par simple découpe et qu'il peut être fusionné aux extrémités de la bande de matière 1 selon un procédé classique.

Pour équiper une bande de matière 1 d'un tel dispositif de jonction 10, on forme les zones d'assemblage 4, 5, 21, 31 respectivement dans les extrémités 2, 3 longitudinales de la bande de matière 1 et dans les éléments de jonction 20, 30 du dispositif de jonction 10 adapté. On crée notamment par estampage, découpe au jet d'eau, ou par toute autre technique adéquate, les doigts 6, 11 et les creux 7, 12 des zones d'assemblage 4, 5, 21, 31. Dans ce cas, on coupe l'âme de traction 17 intégrée dans les éléments de jonction 20, 30 sans préjudice sur les propriétés mécaniques du dispositif de jonction 10. C'est pourquoi on obtient, dans les éléments de jonction 20, 30 des spires ou des boucles longitudinales ouvertes, la partie des spires ou des boucles opposée à la denture 22, 32 ayant été coupée lors de la création des zones d'assemblage 21, 31. On lie intimement ces zones d'assemblage 4, 5, 21, 31 dans une empreinte correspondante, sous presse chauffante, pour solidariser définitivement les éléments de jonction 20, 30 aux extrémités 2, 3 de la bande de matière 1. Cette bande de matière 1 pourvue de son dispositif de jonction 10 peut ensuite équiper tout type de machine. Elle peut être facilement montée et démontée grâce à la présence du dispositif de jonction 10 ce qui facilite grandement les opérations de maintenance sur les machines.

Il ressort clairement de cette description que l'invention permet d'atteindre les buts fixés, à savoir un dispositif de jonction 10 réversible, peu coûteux, facile à mettre en oeuvre, compatible chimiquement avec la bande de matière 1 à équiper, tout en offrant une résistance à la traction optimale, voire comparable à une bande de matière fermée sans jonction, et adaptée particulièrement aux courroies crantées puisque le dispositif de jonction 10 n'engendre aucune modification de caractéristiques.

La présente invention n'est pas limitée aux exemples de réalisation décrits mais s'étend à toute modification et variante évidentes pour un homme du métier.

## Revendications

1. Dispositif de jonction (10) pour fermer une bande de matière (1) en boucle, telle que notamment une bande transporteuse, une courroie de transmission ou similaire, ce dispositif de jonction comportant deux éléments de jonction (20, 30) pourvus à une extrémité d'une zone d'assemblage (21, 31) agencée pour être liée intimement respectivement aux deux extrémités (2, 3) longitudinales de la bande de matière (1), et d'une denture (22, 32) à l'autre extrémité, les dentures (22, 32) étant prévues respectivement dans le plan des éléments de jonction (20, 30) et étant de forme complémentaire pour s'emboîter entre elles, les dents (13) de chaque denture (22, 32) comportant au moins un orifice transversal (14) aligné avec celui des dents (13) voisines, de sorte à définir, lorsque les dentures (22, 32) sont emboîtées, au moins un passage transversal agencé pour accueillir au moins une tige de verrouillage (15, 15a, 15b), **caractérisé en ce que** les éléments de jonction (20, 30) sont réalisés dans une matière thermoplastique compatible avec la matière de ladite bande (1) et comportent chacun au moins une âme de traction (17) noyée dans ladite matière thermoplastique, **en ce que** ladite âme de traction (17) s'étend longitudinalement dans lesdits éléments de jonction (20, 30) jusque dans les dents (13) de chaque denture (22, 32) et **en ce que** ladite âme de traction (17) entoure au moins partiellement l'orifice transversal (14) des dents (13) de chaque denture (22, 32) de sorte que, lorsque ledit dispositif de jonction (10) est assemblé par ladite tige de verrouillage (15, 15a, 15b), les âmes de traction (17) des deux éléments de jonction (20, 30) augmentent la résistance à la traction dudit dispositif de jonction (10).

2. Dispositif de jonction selon la revendication 1, **caractérisé en ce que** chaque élément de jonction (20, 30) comporte une âme de traction (17) disposée en spires longitudinales (19) entre sa zone d'assemblage (21, 31) et sa denture (22, 32).

3. Dispositif de jonction selon la revendication 1, **caractérisé en ce que** chaque élément de jonction (20, 30) comporte une pluralité d'âmes de traction disposées en boucles longitudinales entre sa zone d'assemblage (21, 31) et sa denture (22, 32).

4. Dispositif de jonction selon l'une quelconque des revendications 2 et 3, **caractérisé en ce que** les brins des spires ou des boucles longitudinales formées par ladite âme de traction sont disposés dans un même plan longitudinal confondu avec la fibre neutre dudit dispositif de jonction.

5. Dispositif de jonction selon la revendication 4, **caractérisé en ce que** les spires ou les boucles longitudinales (19) sont reliées entre elles par une trame transversale (19a) formant avec elles un treillis.

6. Dispositif de jonction selon la revendication 1 pour une bande de matière (1) pourvue d'une face crantée, **caractérisé en ce que** lesdits éléments de jonction (20, 30) comportent une face crantée de manière à assurer la continuité et le pas des crans de ladite bande de matière (1).

7. Dispositif de jonction selon la revendication 1, **caractérisé en ce que** les dentures (22, 32) des éléments de jonction (20, 30) comportent des dents (13) parallélépipédiques.

8. Dispositif de jonction selon la revendication 1, **caractérisé en ce que** les dents (13) desdites dentures (22, 32) comportent un seul orifice transversal (14) agencé pour définir un axe d'articulation lorsque ledit dispositif de jonction (10) est assemblé.

9. Dispositif de jonction selon la revendication 1, **caractérisé en ce que** lesdits éléments de jonction (20, 30) comportent au moins une fente longitudinale (16) séparant leur denture (22, 32) en au moins deux parties agencées pour accueillir dans le passage transversal défini par lesdits orifices transversaux (14) au moins deux tiges de verrouillage (15a, 15b) disposées tête bêche.

10. Dispositif de jonction selon la revendication 1, **caractérisé en ce que** la zone d'assemblage (21, 31) de chaque élément de jonction (20, 30) comporte au moins un doigt (11) et un creux (12) tous deux allongés et de forme complémentaire.

11. Bande de matière (1), telle que notamment une bande transporteuse, une courroie de transmission ou similaire, cette bande de matière étant fermée en boucle par au moins un dispositif de jonction (10) lequel comporte deux éléments de jonction (20, 30) assemblés d'une part aux deux extrémités (2, 3) longitudinales de ladite bande de matière (1) de manière intime par une zone d'assemblage (21, 31), et d'autre part entre eux par emboîtement de deux dentures (22, 32) de forme complémentaire prévues respectivement dans le plan de chacun des éléments de jonction (20, 30), les dents (13) de chaque denture (22, 32) comportant au moins un orifice transversal (14) aligné avec celui des dents (13) voisines, de sorte à définir, lorsque les dentures (22, 32) sont emboîtées, au moins un passage transversal agencé pour accueillir au moins une tige de verrouillage (15, 15a, 15b), **caractérisée en ce qu'**elle comporte au moins un dispositif de jonction (10) selon l'une quelconque des revendications précédentes, dans lequel lesdits éléments de jonction (20, 30) sont réalisés en matière thermoplastique compatible avec la matière de ladite bande (1) et comportent chacun au moins une âme de traction (17) noyée dans ladite matière thermoplastique, **en ce que** ladite âme de traction (17) s'étend longitudinalement dans lesdits éléments de jonction (20, 30) jusque dans les dents (13) de chaque denture (22, 32) et **en ce que** ladite âme de traction (17) entoure au moins partiellement l'orifice transversal (14) des dents (13) de chaque denture (22, 32) de sorte que, lorsque ledit dispositif de jonction (10) est assemblé par au moins une tige de verrouillage (15, 15a, 15b), lesdites âmes de traction (17) augmentent la résistance à la traction dudit dispositif de jonction (10).

12. Bande de matière selon la revendication 11, ladite bande de matière (1) comportant une face crantée, **caractérisée en ce que** lesdits éléments de jonction (20, 30) comportent une face crantée de manière à assurer la continuité et le pas des crans de ladite bande de matière (1).

13. Bande de matière selon la revendication 11, **caractérisée en ce que** les dentures (22, 32) des éléments de jonction (20, 30) comportent des dents (13) parallélépipédiques.

14. Bande de matière selon la revendication 11, **caractérisée en ce que** les dents (13) desdites dentures (22, 32) comportent un seul orifice transversal (14) agencé pour définir un axe d'articulation lorsque ledit dispositif de jonction (10) est assemblé.

15. Bande de matière selon la revendication 11, **caractérisée en ce que** lesdits éléments de jonction (20, 30) comportent au moins une fente longitudinale (16) séparant leur denture (22, 32) en au moins deux parties agencées pour accueillir dans le passage transversal défini par lesdits orifices transversaux (14) au moins deux tiges de verrouillage (15a, 15b) disposées tête bêche.

16. Bande de matière selon la revendication 11, **caractérisée en ce que** lesdites zones d'assemblage (4, 5 ; 21, 31) respectivement des extrémités (2, 3) longitudinales de ladite bande de matière (1) et des éléments de jonction (20, 30) comportent au moins un doigt (6, 11) et un creux (7, 12) tous deux allongés et de forme complémentaire de sorte que les zones d'assemblage (4, 5 ; 21, 31) qui se correspondent sont emboitées l'une dans l'autre pour être fusionnées.

## Patentansprüche

1. Verbindungsvorrichtung (10) zu Schließen in einer Schleife eines Materialstreifens (1) so wie insbesondere ein Förderband, ein Antriebsriemen oder ähnlich, wobei diese Verbindungsvorrichtung zwei Verbindungselemente (20, 30) beträgt, die an einem Ende mit einem Verbindungsbereich (21, 31) versehen sind, der ausgelegt ist, um jeweils eng mit beiden Längsenden (2, 3) des Materialbands (1) verbunden zu werden, sowie mit einer Verzahnung (22, 32) am anderen Ende, wobei die Verzahnungen (22, 32) jeweils in der Ebene der Verbindungselemente (20, 30) vorgesehen sind und komplementäre Formen aufweisen, um ineinander zu greifen, wobei die Zähne (13) jeder Verzahnung (22, 32) zumindest eine Queröffnung (14) betragen, die mit der der angrenzenden Zähne (13) ausgerichtet ist, um, wenn die Verzahnungen (22, 32) ineinander greifen, zumindest einen Querdurchgang zu bilden, der ausgelegt ist, um zumindest einen Verriegelungsstift (15, 15a, 15b) aufzunehmen, **dadurch gekennzeichnet, dass** die Verbindungselemente (20, 30) aus einem mit dem Material von besagtem Band (1) kompatiblen thermoplastischen Material hergestellt sind und jeweils zumindest eine in besagtem thermoplastischen Material versunkene Zugseele (17) betragen, dadurch, dass besagte Zugseele (17) sich in Längsrichtung in besagten Verbindungselementen (20, 30) bis in die Zähne (13) jeder Verzahnung (22, 32) erstreckt, und dadurch, dass besagte Zugseele (17) die Queröffnung (14) der Zähne (13) jeder Verzahnung (22, 32) zumindest zum Teil umschließt, so dass, wenn besagte Verbindungsvorrichtung (10) durch besagten Verriegelungsstift (15, 15a, 15b) zusammengefügt ist, die Zugseelen (17) der beiden Verbindungselemente (20, 30) die Zugfestigkeit von besagter Verbindungsvorrichtung erhöhen (10).

2. Verbindungsvorrichtung nach Anspruch 1, **dadurch gekennzeichnet, dass** jedes Verbindungselement (20, 30) eine in Längswindungen (19) zwischen seinem Verbindungsbereich (21, 31) und seiner Verzahnung (22, 32) angeordnete Zugseele (17) beträgt.

3. Verbindungsvorrichtung nach Anspruch 1, **dadurch gekennzeichnet, dass** jedes Verbindungselement (20, 30) eine Vielzahl in Längswindungen zwischen seinem Verbindungsbereich (21, 31) und seiner Verzahnung (22, 32) angeordnete Zugseelen beträgt.

4. Verbindungsvorrichtung nach einem beliebigen der Ansprüche 2 und 3, **dadurch gekennzeichnet, dass** die durch besagte Zugseele gebildeten Windungen oder Längsschleifen in einer selben Ebene angeordnet sind, die der neutralen Faser von besagter Verbindungsvorrichtung entspricht.

5. Verbindungsvorrichtung nach Anspruch 4, **dadurch gekennzeichnet, dass** die Windungen oder Längsschleifen (19) durch Schussfäden (19a) miteinander verbunden sind und mit diesen ein Geflecht bilden.

6. Verbindungsvorrichtung nach Anspruch 1 für einen mit einer gezahnten Seite versehenen Materialstreifen (1), **dadurch gekennzeichnet, dass** besagte Verbindungselemente (20, 30) eine gezahnte Seite aufweisen, um die Durchgängigkeit und die Steigung der Zähne von besagtem Materialstreifen (1) zu gewährleisten.

7. Verbindungsvorrichtung nach Anspruch 1, **dadurch gekennzeichnet, dass** die Verzahnungen (22, 32) der Verbindungselemente (20, 30) parallelepipedförmige Zähne (13) aufweisen.

8. Verbindungsvorrichtung nach Anspruch 1, **dadurch gekennzeichnet, dass** die Zähne (13) von besagten Verzahnungen (22, 32) eine einzige Queröffnung (14) betragen, die ausgelegt ist, um eine Gelenkachse zu bilden wenn besagte Verbindungsvorrichtung (10) zusammengefügt ist.

9. Verbindungsvorrichtung nach Anspruch 1, **dadurch gekennzeichnet, dass** besagte Verbindungselemente (20, 30) zumindest einen Längsspalt (16) betragen, der deren Verzahnung (22, 32) in zumindest zwei Teile teilt, die ausgelegt sind, um im von besagten Queröffnungen (14) gebildeten Querdurchgang zumindest zwei entgegengerichtet angeordnete Verriegelungsstifte (15a, 15b) aufzunehmen.

10. Verbindungsvorrichtung nach Anspruch 1, **dadurch gekennzeichnet, dass** der Verbindungsbereich (21, 31) jedes Verbindungselements (20, 30) zumindest einen Finger (11) und eine Aussparung (12) beträgt, die beide länglich sind und eine komplementäre Form aufweisen.

11. Materialstreifen (1), so wie insbesondere ein Förderband, ein Antriebsriemen oder ähnlich, wobei dieser Materialstreifen durch zumindest eine Verbindungsvorrichtung (10) in einer Schleife geschlossen ist, die zwei Verbindungselemente (20, 30) beträgt, die einerseits eng durch einen Verbindungsbereich (21, 31) mit den beiden Längsenden (2, 3) von besagtem Materialstreifen (1) verbunden sind, und andererseits durch Zusammenfügen von zwei jeweils in der Ebene jedes der Verbindungselemente (20, 30) vorgesehenen Verzahnungen (22, 32) mit komplementären Formen miteinander verbunden sind, wobei die Zähne (13) jeder Verzahnung (22, 32) zumindest eine Queröffnung (14) betragen, die mit der der angrenzenden Zähne (13) ausgerichtet ist, um, wenn die Verzahnungen (22, 32) ineinander greifen, zumindest einen Querdurchgang zu bilden, der ausgelegt ist, um zumindest einen Verriegelungsstift (15, 15a, 15b) aufzunehmen, **dadurch gekennzeichnet, dass** er zumindest eine Verbindungsvorrichtung (10) nach einem beliebigen der vorhergehenden Ansprüche beträgt, in dem besagte Verbindungselemente (20, 30) aus einem mit dem Material von besagtem Band (1) kompatiblen thermoplastischen Material hergestellt sind und jeweils zumindest eine in besagtem thermoplastischen Material versunkene Zugseele (17) betragen, dadurch, dass besagte Zugseele (17) sich in Längsrichtung in besagten Verbindungselementen (20, 30) bis in die Zähne (13) jeder Verzahnung (22, 32) erstreckt, und dadurch, dass besagte Zugseele (17) die Queröffnung (14) der Zähne (13) jeder Verzahnung (22, 32) zumindest zum Teil umschließt, so dass, wenn besagte Verbindungsvorrichtung (10) durch zumindest einen Verriegelungsstift (15, 15a, 15b) zusammengefügt ist, besagte Zugseelen (17) die Zugfestigkeit von besagter Verbindungsvorrichtung (10) erhöhen.

12. Materialstreifen nach Anspruch 11, wobei besagter Materialstreifen (1) eine gezahnte Seite aufweist, **dadurch gekennzeichnet, dass** besagte Verbindungselemente (20, 30) eine gezahnte Seite aufweisen, um die Durchgängigkeit und die Steigung der Zähne von besagtem Materialstreifen (1) zu gewährleisten.

13. Materialstreifen nach Anspruch 11, **dadurch gekennzeichnet, dass** die Verzahnungen (22, 32) der Verbindungselemente (20, 30) parallelepipedförmige Zähne (13) aufweisen.

14. Materialstreifen nach Anspruch 11, **dadurch gekennzeichnet, dass** die Zähne (13) von besagten Verzahnungen (22, 32) eine einzige Queröffnung (14) betragen, die ausgelegt ist, um eine Gelenkachse zu bilden wenn besagte Verbindungsvorrichtung (10) zusammengefügt ist.

15. Materialstreifen nach Anspruch 11, **dadurch gekennzeichnet, dass** besagte Verbindungselemente (20, 30) zumindest einen Längsspalt (16) betragen, der deren Verzahnung (22, 32) in zumindest zwei Teile teilt, die ausgelegt sind, um im von besagten Queröffnungen (14) gebildeten Querdurchgang zumindest zwei entgegengerichtet angeordnete Verriegelungsstifte (15a, 15b) aufzunehmen.

16. Materialstreifen nach Anspruch 11, **dadurch gekennzeichnet, dass** besagte Verbindungsbereiche (4, 5; 21, 31) der Längsenden (2, 3) von besagtem Materialstreifen (1) bzw. der Verbindungselemente (20, 30) zumindest einen Finger (6, 11) und eine Aussparung (7, 12) betragen, die beide eine längliche und komplementäre Form aufweisen, so dass die jeweils entsprechenden Verbindungsbereiche (4, 5; 21, 31) ineinander gefügt werden um verschmolzen zu werden.

## Claims

1. Splicing device (10) for closing a looped material band (1) such as in particular a conveyor belt, a power transmission belt or similar, whereby this splicing device comprises two splicing elements (20, 30) provided at one end with an assembly area (21, 31) arranged to be intimately linked respectively to the two longitudinal ends (2, 3) of material band (1) and with a toothing (22, 23) at the other end, toothings (22, 23) being provided respectively in the plane of the splicing elements (20, 30) and having a complementary shape to fit into each other, teeth (13) of each toothing (22, 32) comprising at least one transverse opening (14) aligned with that of the neighboring teeth (13), in order to define, when toothings (22, 32) are fitted into each other, at least one transverse passage arranged to receive at least one locking rod (15, 15a, 15b), **characterized in that** splicing elements (20, 30) are made out of a thermoplastic material compatible with the material of said band (1) and comprise each at least one traction core (17) embedded in said thermoplastic material, **in that** said traction core (17) extends longitudinally in said splicing elements (20, 30) up to the teeth (13) of each toothing (22, 32) and **in that** said traction core (17) surrounds at least partly the transverse opening (14) of teeth (13) of each toothing (22, 32) so that, when said splicing device (10) is assembled by means of said locking rod (15, 15a, 15b), the traction cores (17) of the two splicing elements (20, 30) increase the tensile strength of said splicing device (10).

2. Splicing device according to claim 1, **characterized in that** each splicing element (20, 30) comprises a traction core (17) arranged in longitudinal turns (19) between its assembly area (21, 31) and its toothing (22, 32).

3. Splicing device according to claim 1, **characterized in that** each splicing element (20, 30) comprises a plurality of traction cores arranged in longitudinal loops between its assembly area (21, 31) and its toothing (22, 32).

4. Splicing device according to any of claims 2 and 3, **characterized in that** the strands of the longitudinal turns or loops formed by said traction core are arranged in a same longitudinal plane identical to the neutral fiber of said splicing device.

5. Splicing device according to claim 4, **characterized in that** the longitudinal turns or loops (19) are connected with each other by a transverse shoot (19a) to form a mesh with them.

6. Splicing device according to claim 1 for a material band (1) having a toothed side, **characterized in that** said splicing elements (20, 30) comprise a toothed side in order to ensure the continuity and the pitch of the notches of said material band (1).

7. Splicing device according to claim 1, **characterized in that** the toothings (22, 32) of the splicing elements (20, 30) comprise parallelepipedic teeth (13).

8. Splicing device according to claim 1, **characterized in that** the teeth (13) of said toothings (22, 32) comprise one single transverse opening (14) arranged to define a joint axis when said splicing device (10) is assembled.

9. Splicing device according to claim 1, **characterized in that** said splicing elements (20, 30) comprise at least one longitudinal slot (16) that separates their toothing (22, 32) in at least two parts arranged to receive at least two locking rods (15a, 15b) arranged head to tail in the transverse passage defined by said transverse openings (14).

10. Splicing device according to claim 1, **characterized in that** the assembly area (21, 31) of every splicing element (20, 30) comprise at least one finger (11) and one recess (12), both having elongated and complementary shapes.

11. Material band (1) such as in particular a conveyor belt, a power transmission belt or similar, whereby this material band is looped by means of at least one splicing device (10) that comprises two splicing elements (20, 30) on the one hand assembled intimately through an assembly area (21, 31) with the two longitudinal ends (2, 3) of said material band (1) and, on the other hand, assembled together by fitting into each other of two toothings (22, 23) having a complementary shape provided respectively in the plane of each of the splicing elements (20, 30), the teeth (13) of each toothing (22, 32) comprising at least one transverse opening (14) aligned with that of the neighboring teeth (13), in order to define, when toothings (22, 32) are fitted into each other, at least one transverse passage arranged to receive at least one locking rod (15, 15a, 15b), **characterized in that** it comprises at least one splicing device (10) according to any of the previous claims, wherein said splicing elements (20, 30) are made out of a thermoplastic material compatible with the material of said band (1) and comprise each at least one traction core (17) embedded in said thermoplastic material, **in that** said traction core (17) extends longitudinally in said splicing elements (20, 30) up to the teeth (13) of each toothing (22, 32) and **in that** said traction core (17) surrounds at least partly the transverse opening (14) of teeth (13) of each toothing (22, 32) so that, when said splicing device (10) is assembled by means of at least one locking rod (15, 15a, 15b), said traction cores (17) increase the tensile strength of said splicing device (10).

12. Material band according to claim 11, said material band (1) having a toothed side, **characterized in that** said splicing elements (20, 30) comprise a toothed side in order to ensure the continuity and the pitch of the notches of said material band (1).

13. Material band according to claim 11, **characterized in that** the toothings (22, 32) of the splicing elements (20, 30) comprise parallelepipedic teeth (13).

14. Material band according to claim 11, **characterized in that** the teeth (13) of said toothings (22, 32) comprise one single transverse opening (14) arranged to define a joint axis when said splicing device (10) is assembled.

15. Material band according to claim 11, **characterized in that** said splicing elements (20, 30) comprise at least one longitudinal slot (16) that separates their toothing (22, 32) in at least two parts arranged to receive at least two locking rods (15a, 15b) arranged head to tail in the transverse passage defined by said transverse openings (14).

16. Material band according to claim 11, **characterized in that** said assembly areas (4, 5 ; 21, 31) belonging respectively to the longitudinal ends (2, 3) of said material band (1) and to the splicing elements (20, 30) comprise at least one finger (6, 11) and one recess (7, 12), both being elongated and having complementary shapes, so that the matching assembly areas (4, 5 ; 21, 31) are fitted into each other for being merged.
